Europäisches Patentamt

**European Patent Office**

**Office européen des brevets**

(11) Publication number: **0 363 951**
**A2**

(12) # EUROPEAN PATENT APPLICATION

(21) Application number: **89118961.5**

(22) Date of filing: **12.10.89**

(51) Int. Cl.⁵: **B62B 3/06**

(30) Priority: **14.10.88 SE 8803670**

(43) Date of publication of application:
**18.04.90 Bulletin 90/16**

(84) Designated Contracting States:
**AT BE CH DE ES FR GB GR IT LI LU NL SE**

(71) Applicant: **SAMHALL LAVI**
**Box 511**
**S-291 25 Kristianstad(SE)**

(72) Inventor: **Bergman, Sven**
**Höjavögen 30**
**S-262 52 Ängelholm(SE)**

(74) Representative: **Asketorp, Göran P.**
**Asketorp Patent & Juridik AB P.O. Box 1**
**S-230 10 Skanör(SE)**

(54) **Valve for a fork-lift truck.**

(57) A means at a fork-lift truck for adjustment of the idle operation. A valve ball 28 provides a reversed pressure relief operation for providing the idle operation. The force at which the idle operation is operated is adjustable by a screw 32, having a conical portion 34, cooperating with a adjustment ball 33. A spring is adapted between the balls 28 and 33. The force required for moving the ball 28 against the valve seat 35 thereof is adjustable by the screw 32 .

Fig 4

EP 0 363 951 A2

## A means at a fork-lift truck

AREA OF INVENTION

This invention relates to a means at a fork-lift truck especially a means for improving the idle operation of such a fork-lift truck.

PRIOR ART

A fork-lift truck according to known technique wherein the present invention can be used comprises two parallel lift forks, which at the outer ends thereof are supported by wheels. The other ends of the lifting forks are supported by a lifting cylinder, which in turn is supported by a pair of wheels. An example of such a fork-lift truck is shown in Swedish Patent Specification No. 346973.

The fork-lift truck is of the manual type and is completely powered by hand. When it is used, it is put below a loading pallet to be lifted, whereupon the lifting forks are positioned so low that they can pass below the loading pallet. Than, a hand lever is operated and drives a hydraulic pump cylinder. The hydraulic fluid is pumped to said lifting cylinder which lifts the rear end of the truck. At the same time, the front wheels lift the front ends of the forks via a link mechanism. Then, the loading pallet is lifted vertically upwards and rests on the lifting forks, which in turn are supported by the wheels and the loading pallet can be moved by pulling in said hand lever.

At the lowering of the load, a lever is operated so that the hydraulic fluid in the lifting cylinder is relieved to a sump with a predetermined speed.

As appears from the short description given above, the hand lever performs two functions. It operates as a pump lever for lifting the loading pallet and as a pulling lever for moving the fork-lift truck (with or without load). However, it is indispensable that the hand lever must be moved upwards and downwards during the use as a pulling lever, for example at the passage of thresholds or other obstacles. Then, the hand lever will power the pump cylinder and hydraulic fluid is pumped to the lifting cylinder. This is non-desirable since then the load will become unstable.

This problem is solved according to known technique to providing the pump cylinder with an idle function. An idle valve presents the hydraulic fluid from being pumped to the lifting cylinder at small or slow movements of the hand lever, i.e. when the velocity of the hydraulic fluid is small. Instead, the hydraulic fluid at low velocity passes direct to a sump. The lifting cylinder is provided with a one-way valve preventing back-flow of the hydraulic fluid.

In the construction according to said Swedish Patent Specification No. 346973, said idle valve comprises a spring loaded ball positioned in the flow path between the pump cylinder and the lifting cylinder. The ball is pressed from its seat by a spring, i.e. the idle valve is in principal a reversed pressure relief valve. When the flow velocity is low or zero, the ball is positioned at a distance from its seat and the hydraulic fluid flows through a first channel to a sump or storage vessel. However, if the velocity of the hydraulic fluid increases, it will act upon the ball and move it. At a certain velocity depending on the spring force, the ball abuts the seat and blocks the first channel. Then, the hydraulic fluid must pass via the other channel to the lifting cylinder. The lifting cylinder is normally loaded, which means that, when the idle valve is open, the hydraulic fluid takes the easiest way to the sump.

In conclusion, the idle valve makes possible to operate the hand lever upwards and downwards with a low velocity without influencing upon the lifting cylinder. Above a certain velocity of the hand lever, the pump cylinder will be connected to the lifting cylinder whereby a rising of the load takes place.

However, said idle valve has caused great problems at the manufacturing. It has shown to be very difficult to maintain an equal quality of the spring so that the velocity at which the idle valve is operated always will be the same independent of the sample of the fork-lift truck and the time. At the use in cold environments, the hydraulic fluid has a higher viscosity, which means that the idle operation will be sensible and maybe permit almost no movement at all until activated.

The reason for such difficulties is not merely dependant on the force properties of the spring. Moreover, tolerances of the hole in which the spring is positioned and the cooperation between the spring and the ball influence on the operation. A very small tolerance in the depth of the hole may result in great differences in the idle operation.

Thus, there is a need for achieving an idle operation in which the idle velocity is adjustable without too great intrusion in the device.

The most used solution to such a problem is to provide an adjustment screw in connection with the lower portion of the abutment surface of the spring. In the present case such a solution is possible but means that the adjustment screw will be very difficult to reach.

One way to solve a problem is shown in US Patent Specification No. 3042075, disclosing a device for calibrating a pressure dependant valve. In this device, the supporting surface of the spring, which is a ball, is adjusted so that correct opening pressure is obtained. The ball has a press fit to the corresponding walls and is adjusted in the desired position and is retained in the position by the press fit.

DISCLOSURE OF THE INVENTION

The object of the present invention is to provide an ajustment device for a fork-lift truck of the type described above in which the adjustment device is effective and is easily accessible and in which the mounting is completely insensible and in which always high safety is obtained independent of the tolerances.

According to the invention, this is accomplished by an adjustment device mounted in the valve housing of the fork-lift truck. The adjustment device comprises a ball, on which the lower part of the spring rests, and a screw with a conical end. The axis of the screw is perpendicular to the axis of the spring. At operating the screw, the conical end thereof cooperates with the lower ball and moves it a distance upwards or downwards, whereby the position of the spring is controlled in the axial direction and thence, the position of the valve ball in the axial direction can be controlled very carefully.

The device according to the invention is of such a construction that it is easy to install firstly in new produced trucks.

SHORT DESCRIPTION OF THE DRAWINGS

The invention is described in more details below with reference to the appended drawings showing an embodiment of the invention.

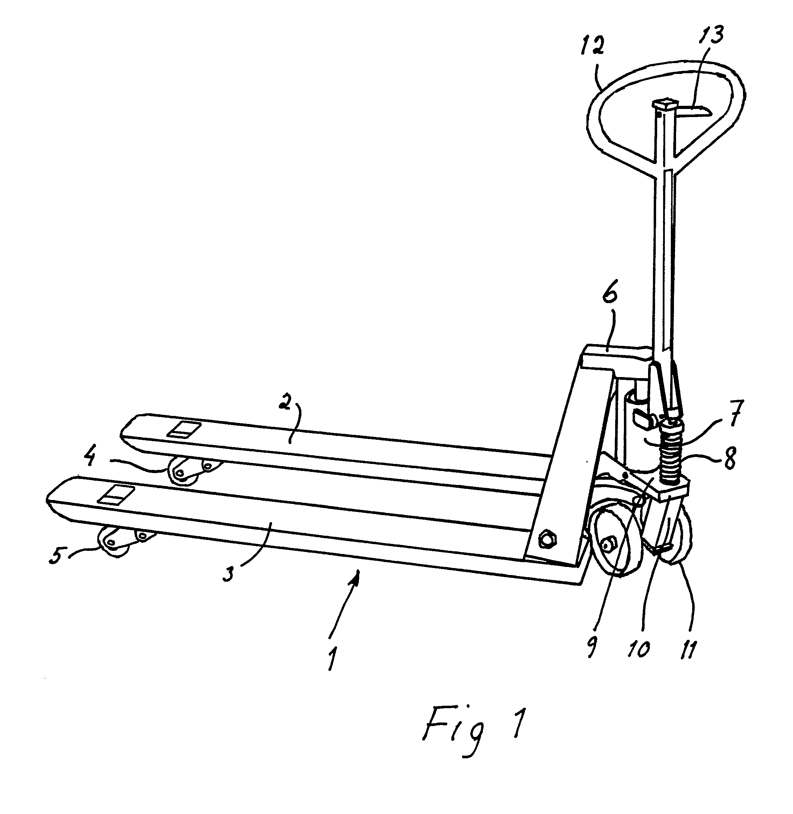

Thus, Fig. 1 is a perspective view of a known fork-lift truck of the type in which the invention is intended to be used.

Fig. 2 is a cross-sectional view showing the pump cylinder and the lifting cylinder and an intervening valve housing.

Fig. 3 is a plan view of the valve housing.

Fig. 4 is a cross-sectional view in enlarged scale of the valve housing with the adjustment device mounted according to the invention.

DETAILED DESCRIPTION OF THE PREFERRED EMBODIMENT

Fig. 1 shows a fork-lift truck of such a type in which the invention is contemplated to be used.

There are many other similar types of fork-lift trucks and the invention is of course not limited to be used at exactly the fork-lift truck of the type GV 2000 made of SAMHALL LAVI, KRISTIANSTAD as shown. The adjustment device according to the invention can very well be used at other valve devices in which simple and efficient adjustment is required and in which prior art solutions does not work.

The fork-lift truck 1 comprises two forks 2 and 3 which at each front end is supported by a wheel 4 and 5 and at the rear ends are connected to each other through a yoke 6 and are supported by a lifting cylinder 7. The lifting cylinder 7 and a pump cylinder 8 are interconnected via a valve housing 9 and forms together a lifting unit 10 supported by a pair of wheels 11. The lifting unit 10 is pivotable connected to the forks via a link mechanism allowing the yoke to be risen and lowered in relation to the lifting unit 10 via the lifting cylinder. The link mechanism also operates the front wheels 4 and 5 so that the forks always are horizontal and parallel with the foundation.

Moreover, the lifting unit 10 comprises a hand lever 12 which is pivotably connected to the lifting unit and operates the pump cylinder at the movement of the hand lever upwards and downwards. Moreover, the hand lever 12 has a lever 13 for relief of the lifting cylinder when the load is to be lowered. When the fork-lift truck should be moved, tha hand lever is pulled and then takes a suitable angle to the fork-lift truck in order to obtain a convenient height position.

The fork-lift truck is of a conventional construction and is not described in further details hereinbelow.

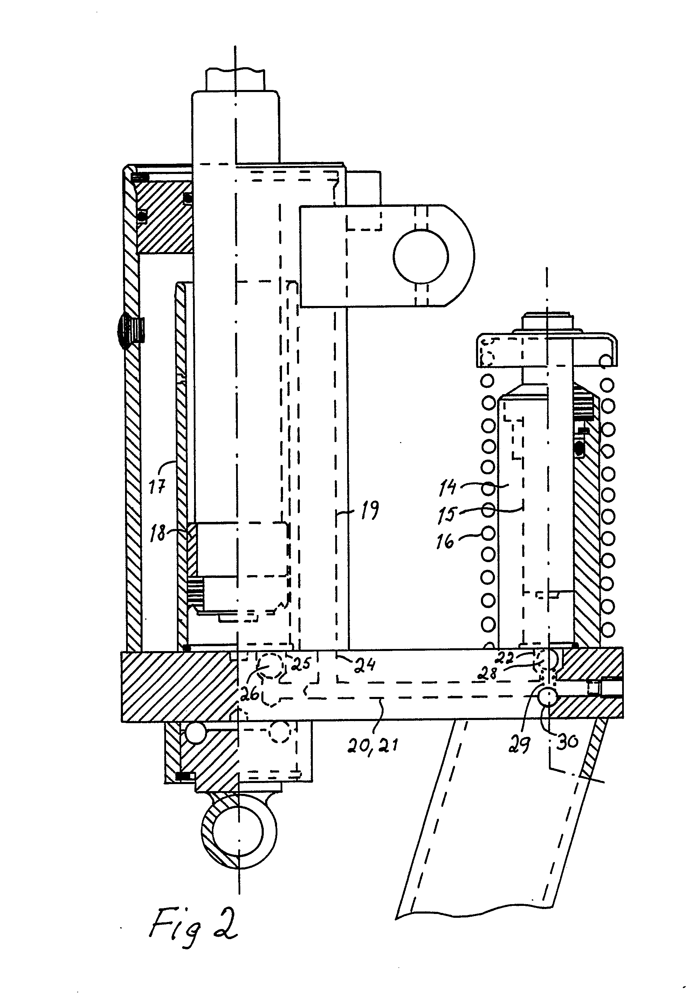

Fig. 2 shows in cross-section the lifting unit 10 with inter alia the pump cylinder 8, the lifting cylinder 7 and the valve housing 9. The pump cylinder 8 comprises an upper pump housing 14 with a piston 15 and a spring 16 urging the piston upwards in Fig. 2. The hand lever 12 influences upon the upper surface of the piston 15 as shown in Fig. 1.

Moreover, the lifting cylinder 7 is shown and the pertaining cylinder housing 17 and piston 18. There is also a storage vessel or sump 19.

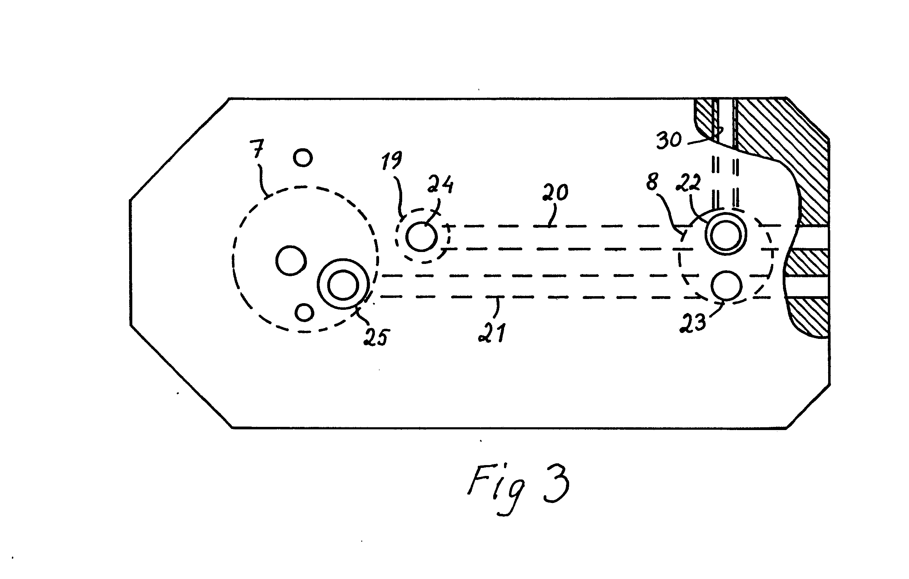

The cylinders 7 and 8 are interconnected via the valve housing 9 and comprises two channels 20 and 21 (see also Fig. 3) and connecting borings 22, 23, 24 and 25. At the boring 25 opening to the lifting cylinder there is a one-way valve in the nature of a ball 26 preventing back-flow of the hydraulic fluid. In the boring 22 opening to the pump cylinder 8 there is an idle valve in the nature of a ball 28 loaded by a spring 29.

The valve housing 9 is shown more clearly in Fig. 3 which is a plan view of the valve housing.

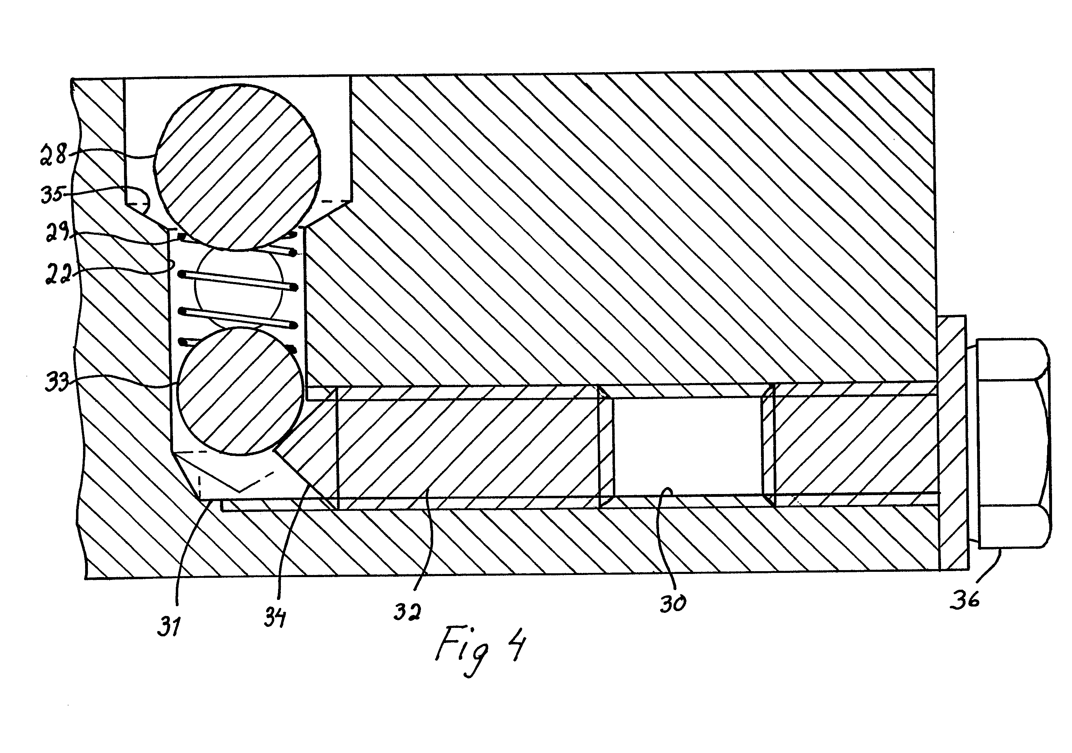

From this figure it appears that the channel 20 interconnects the borings 22 and 24 and the channel 21 interconnects borings 23 and 25. The lifting cylinder 7, the pump cylinder 8 and the sump 19 are shown as circles with broken lines in Fig. 3. From Fig. 3 it appears that both borings 22 and 23 open to the pump cylinder. Another channel 30 is shown in Fig. 3 and opens to the boring 22 as shown in more details i Fig. 4.

In Fig. 4, the ball 28 is shown resting on its spring 29. In the previously known construction, the lower portion of the spring rested directly on the bottom 31 of the boring 22, which was the reason for the above-mentioned problems. According to the present invention, the channel 30 is provided with windings for a screw 32. Moreover, the lower portion of the spring 29 (the spring is here shorter) rests on another ball 33. The inner end of the screw 32 is provided with a conical portion 34 cooperating with the ball 33 as appears from Fig. 4. If the screw is moved to the left in Fig. 4, the ball 33 will rise and it will be required a greater force for bringing the ball 28 to abutment to its seat 35. The other way around, it the screw is moved to the right in Fig. 4, the ball 33 will be lowered, which means that less force is required for bringing the ball 28 to abutment to its seat 35. The idle operation is thus influenced upon by the adjustment of the screw 32.

The screw 32 in Fig. 4 is shown enclosed in the channel 30 which is sealed at its end by a screw 36. At calibration, the screw 36 is removed, whereupon a insex key is inserted in the screw 32 and the screw is moved to a position which gives the desired idle operation.

From the description given above, the operation of the invention would be obvious. At slow operation of the hand lever, the hydraulic fluid is pumped through the boring 22 past the ball 28 via the channel 20 to the sump 19. Since the lifting cylinder as a rule is loaded, no hydraulic fluid will pass via the boring 23 and the channel 22 to the lifting cylinder but the hydraulic fluid takes the easiest way, which is to the sump 19.

If the hand lever is operated more heavily, the flow velocity of the hydraulic fluid past the ball 28 will increase. At a certain flow velocity, the hydraulic fluid will move the ball 28 against the force of the spring 29 and will close the boring 22. Then, the hydraulic fluid must pass via the boring 23 and the channel 21 to the boring 25 and via the one-way valve 26 to the lifting cylinder 7. At the movement upwards of the hand lever, the pump cylinder will exert a suction operation. Then, the one-way valve 26 will close and the idle valve 28 will open so that the hydraulic fluid can flow from the sump 19 to the pump cylinder 8. It is realized that the operating surface of the pump cylinder 8 is smaller than the operating surface of the lifting cylinder, which results in a desired transmission radio.

Hereinabove, the invention has been described by means of a preferred embodiment of the invention. It is however realized that the invention is not limited to said embodiment but can be applied to the similar fork-lift trucks or to other devices with similar operation. The invention is only limited by the appended patent claims.

## Claims

1. An adjustment device for an idle valve of a fork-lift truck comprising a lifting cylinder (7) adapted to lift forks (2, 3) of the fork-lift truck, and a pump cylinder (8) adapted to activate the lifting cylinder at operation by a hand lever, said cylinders being interconnected via a valve housing (9) comprising a first channel (20) for connection of the pump cylinder (8) to a sump (19) and a second channel (21) for connection of the pump cylinder (8) to the lifting cylinder (7), and at least one boring (22, 23, 24, 25), one of said borings (22) being positioned between the pump cylinder (8) and said first channel (20) and being provided with an idle valve in the nature of a ball (28) loaded by a spring (29), **characterized** in that one end of the spring cooperates with said idle ball (28) and the other end of the spring cooperating with an adjustment ball (33) supported by an adjustment screw (32) positioned in a third channel (30) adapted perpendicular to said boring (22), whereby said adjustment ball (33) at operation of said adjustment screw (32) is moved along said boring (22) and then adjusts the idle ball (28) to the desired position.

2. A device according to claim 1, **characterized** in that the adjustment screw (32) is adapted completely enclosed in said third channel (30) and being sealed by a stop screw (36).

Fig 1

Fig 2

Fig 3

EP 0 363 951 A2

Fig 4